# EUROPÄISCHE PATENTSCHRIFT

(11) **EP 2 167 839 B1**
(45) Veröffentlichungstag und Bekanntmachung des Hinweises auf die Patenterteilung: **12.04.2017**
(21) Anmeldenummer: 08758864.6
(22) Anmeldetag: 29.05.2008
(51) Int. Cl.: F16F 15/26

(54) **AUSGLEICHSWELLE**
BALANCING SHAFT
ARBRE DE COMPENSATION

(30) Priorität: 14.06.2007 DE 102007027989
(43) Veröffentlichungstag der Anmeldung: 31.03.2010
(73) Patentinhaber: Herzog Intertec GmbH, 78601 Mahlstetten (DE)
(72) Erfinder: HERZOG, Ewald, 78601 Mahlstetten (DE); HERZOG, Raphael, 78601 Mahlstetten (DE)
(74) Vertreter: Maser, Jochen
(86) Internationale Anmeldenummer: PCT/EP2008/004284
(87) Internationale Veröffentlichungsnummer: WO 2008/151724

(56) Entgegenhaltungen:
- EP-A- 0 789 166
- EP-A- 1 081 410
- WO-A-2005/093286
- JP-A- 9 151 993
- JP-A- 2006 002 852

## Beschreibung

Die Erfindung betrifft eine Ausgleichswelle für einen Ein- oder Mehrzylindermotor gemäß dem Oberbegriff des Anspruchs 1.

Aus der WO 2005/093286 A1 ist eine Ausgleichswelle für einen Mehrzylindermotor bekannt, welcher wenigstens zwei Unwuchtgewichtsabschnitte und wenigstens eine Lagerstelle umfasst, wobei die Unwuchtgewichtsabschnitte symmetrisch zur Lagerstelle angeordnet sind und wenigstens einer der Unwuchtgewichtabschnitte mit einem von der Lagerstelle abgewandten Ende als antreibbares Ende für die Ausgleichswelle aufweist. Zwischen den beiden Lagerstellen mit deren symmetrisch dazu angeordneten Unwuchtgewichtsabschnitten ist ein biegeelastisches Koppelelement vorgesehen, um die beiden Abschnitte miteinander zu verbinden. Die Unwuchtgewichtabschnitte sind in etwa halbkreisförmig ausgebildet. Die Lagerstellen sind als kreiszylindrische Scheiben vorgesehen, wobei eine Hälfte der zylinderförmig ausgebildeten Lagerstelle gegenüber den Unwuchtgewichtsabschnitten frei hervorsteht. Zur Aussteifung dieser Ausgleichswelle sind in Längsrichtung der Ausgleichswelle sich erstreckende, T-förmig ausgebildete Streben vorgesehen, die sich von einer Rotationsachse aus an der Unwucht angreifend bis zu einem freien äußeren Randbereich der zylinderförmigen Lagerstelle erstrecken. Dadurch soll die Ausgleichswelle in Längsrichtung ausgesteift werden. Solche Ausgleichswellen sind teils gewichtsoptimiert ausgestaltet, jedoch ist aufgrund der immer höheren Drehzahlen in Mehrzylindermotoren erforderlich, dass die bewegten Massen weiter reduziert werden. Des Weiteren ist die Gewichtseinsparung in der Motorenentwicklung von wesentlicher Bedeutung, um verbesserte Leistungswerte zu erzielen.

Aus der EP 0 789 166 A1 ist eine Ausgleichswelle bekannt, welche zwei Unwuchtgewichtsabschnitte benachbart zu einer Lagerstelle aufweisen. Die Unwuchtgewichtsabschnitte sind von Abdeckungen überdeckt, so dass die Ausgleichswelle eine vollzylindrische Kontur aufweist, um ein sogenanntes Planschen der Unwuchtgewichtsabschnitte zu vermeiden.

Der Erfindung liegt deshalb die Aufgabe zugrunde, eine Ausgleichswelle zu schaffen, bei der eine Reduzierung des Gesamtgewichtes und der bewegten Massen unter Beibehaltung des Unwuchtausgleichs bei Ein- oder Mehrzylindermotoren gegeben ist.

Diese Aufgabe wird erfindungsgemäß durch die Merkmale des Anspruchs 1 gelöst. Weitere vorteilhafte Ausgestaltungen und Weiterbildungen sind in den weiteren abhängigen Ansprüchen angegeben.

Durch die erfindungsgemäße Ausgleichswelle mit einer Lagerstelle, welche eine radiale Lauffläche aufweist, die sich nur partiell über den Umfang der Lagerstelle und somit nicht über einen vollen Umfang von 360° erstreckt und zumindest eine Stützfläche aufweist, wird eine erhebliche Gewichtsreduzierung an der Lagerstelle selbst ermöglicht. Die Lagerstelle ist somit in Teilbereichen freigeschnitten und weist zumindest in dem nicht durch die Lauffläche und die Stützfläche eingenommen Umfang eine Materialreduzierung auf. Durch das Freischneiden der Lagerstelle wird neben der Gewichtsreduzierung der Lagerstelle selbst des Weiteren der Vorteil erzielt, dass ein oder mehrere Unwuchtgewichtsabschnitte ebenfalls reduziert werden können. Die partiell über den Umfang der Lagerstelle sind erstreckende Lauffläche korrespondiert mit dem Umfangsabschnitt der Ausgleichswelle, in dem die Unwuchtgewichtsabschnitte vorgesehen sind. Dadurch wird ermöglicht, dass bei der Rotation der Ausgleichswelle die resultierende Zentrifugalkraft in einem Bereich der Lagerstelle liegt, der durch die partielle Lauffläche umfasst ist, so dass sich die Lauffläche der Ausgleichswelle in diesem Bereich an der Lagerstelle des Motorblocks abstützt. Dadurch wird eine Gewichtseinsparung unter Beibehaltung der Funktion der Ausgleichswelle erzielt, die in einem Bereich zwischen 20 bis 40 % gegenüber einer herkömmlichen Ausgleichswelle liegt. Durch die im Wesentlichen der Lauffläche gegenüberliegende, zumindest eine Stützfläche wird eine erhöhte Laufruhe bei einer Gewichtseinsparung erzielt. Insbesondere bei auftretenden Erschütterungen oder Vibrationen als auch beim An- oder Auslaufen einer Rotation kommt die zumindest eine Stützfläche zum Tragen, um einen ruhigen Lauf der Ausgleichswelle sicherzustellen.

Diese erfindungsgemäße Ausgestaltung der partiell über den Umfang der Lagerstelle ausgebildeten Lauffläche und der zumindest einen der Lauffläche gegenüberliegenden Stützfläche weist des Weiteren den Vorteil auf, dass eine Lagerung mit einer hohen Lebensdauer erhalten bleibt. In dem Bereich, in welchem bei Rotation der Ausgleichswelle die resultierende Zentrifugalkraft wirkt, ist die Lauffläche vollständig ausgebildet und erstreckt sich benachbart hierzu, so dass im Bereich der größten Belastung die Lagerstelle an einer Lagerbuchse, an Rollen einer Nadelhülse, an einem Zylinderrollenlager oder an einem Lagerring des Motorblocks zur Lagerung definiert zur Abstützung anliegt. Der der größten Belastung gegenüberliegende, nur teilweise oder nicht mit einer Lauffläche versehene Bereich der Lagerstelle wird nahezu oder vollständig entlastet, so dass ein Nichtvorhandensein der Lauffläche in diesem Bereich für die Lagerfunktion unschädlich ist. Insbesondere zu Beginn und am Ende einer Rotationsbewegung kommt die zumindest eine Stützfläche unterstützend zum Einsatz.

Nach einer bevorzugt Ausgestaltung der Erfindung ist vorgesehen, dass die zumindest eine Stützfläche denselben Außenumfang aufweist wie die partiell ausgebildete Lauffläche der Lagerstelle. Dadurch kann die Gegenlagerung oder Stützung der Lauffläche ermöglicht werden. Gleichzeitig bleibt ein hohes Maß an einer Gewichtseinsparung erhalten.

Der auf die Lauffläche bei der Rotation der Ausgleichswelle wirkenden Zentrifugalkraft ist bevorzugt eine Kraftresultierende entgegengesetzt ausgebildet, die aus der zumindest einen Stützfläche resultiert. Eine danach ausgebildete Ausgleichswelle ermöglicht eine vielseitige Ausgestaltung der zumindest einen Lauffläche und zumindest einen Stützfläche in Anpassung an verschiedene Anwendungsfälle, wobei die Laufruhe, hohe Lebensdauer und Gewichtseinsparung beibehalten werden können.

Des Weiteren ist bevorzugt vorgesehen, dass die Lauffläche der zumindest einen Lagerstelle einen Umfangswinkel aufweist, der gleich oder kleiner 180° ausgebildet ist. Bei einer solchen Ausgestaltung kann insbesondere eine hohe Gewichtseinsparung erzielt werden, zumal auch die an die zumindest eine Lagerstelle angrenzende Unwuchtgewichtsabschnitte reduziert ausgebildet sein können.

Nach einer vorteilhaften Ausgestaltung der Erfindung ist vorgesehen, dass die Lauffläche der Lagerstelle einen Umfangswinkel zwischen 180° und 359° aufweist und vorteilhafterweise sich innerhalb diesem Umfangswinkel durchgehend erstreckt. Durch die Ausgestaltung der nur partiell ausgebildeten Lauffläche von wenigstens 180° wird sichergestellt, dass bei einem Stillstand der Ausgleichswelle über Kopf, das heißt, dass die Unwuchtgewichtsabschnitte vertikal nach oben ausgerichtet sind, ein rundes Anlaufen ohne Verhaken ermöglicht ist. Die sich über 180° hinaus erstreckenden Endbereiche der Lauffläche übernehmen bei einer solchen Stillstandsposition eine Stützfunktion. Selbst bei einem sehr geringen Freiraum der partiell ausgebildeten Lauffläche von beispielsweise 1° kann ermöglicht sein, dass ein sich zur Rotationsachse erstreckender Bereich zur Gewichtsreduzierung freigeschnitten ist und lediglich die Laufflächen als halbschalen- oder schalenförmigen Kreissegmentabschnitte zur Führung vorgesehen sind.

Nach einer weiteren bevorzugten Ausgestaltung der Erfindung ist vorgesehen, dass zwischen der zumindest einen Stützfläche und der Lauffläche der Lagerstelle eine Vertiefung ausgebildet ist. Dadurch können definierte Verbindungen zwischen der Lauffläche und der zumindest einen Stützfläche ausgebildet werden, die zur Ausbildung eines steifen Querschnittes dienen und beispielsweise auch zur Bildung von sogenannten Schmiertaschen vorgesehen sein können.

Nach einer weiteren vorteilhaften Ausgestaltung der Erfindung ist vorgesehen, dass die Lauffläche oder die zumindest eine Stützfläche in axialer Richtung gesehen ballig ausgebildet sind. Dadurch können während dem Betrieb auftretende Biegebeanspruchungen zwischen den Lagerstellen sowie eine Verkantung oder Verkippung ohne Beschädigungen der Lagerstelle, wie beispielsweise einer Lagerbuchse, eines Lagerringes, Nadelrollen oder Zylinderrollen, aufgenommen werden. Alternativ können auch die Lauffläche und die Stützfläche ballig ausgebildet sein.

Die Lagerstelle der Ausgleichswelle umfasst im Querschnitt zu deren Längsrichtung gesehen zumindest eine Vertiefung, die beispielsweise V-förmig, W-förmig, wannenförmig oder topfförmig ausgebildet ist. Solche Vertiefungen können unmittelbar bei der Herstellung der Ausgleichswelle durch Gießen, Schmieden, Pressen oder dergleichen als auch durch eine spanabhebende Bearbeitung eingebracht werden, so dass eine kostengünstige Herstellung solcher Lagerstellen bei gleichzeitiger Gewichtseinsparung ermöglicht ist.

Bevorzugt ist vorgesehen, dass die zumindest eine Vertiefung der Lagerstelle symmetrisch zur Längsrichtung der Ausgleichswelle ausgebildet ist. Dadurch ist ein konstruktiv einfacher Ausbau der Ausgleichswelle und insbesondere die Auslegung der Unwuchtgewichtsabschnitte ermöglicht. Die zumindest eine Vertiefung kann zwischen der Lauffläche und der Stützfläche oder zwischen den Stützflächen vorgesehen sein. Gegebenenfalls kann auch zwischen zwei Laufflächenabschnitten eine Vertiefung ausgebildet sein.

Nach einer alternativen Ausgestaltung der zumindest einen Vertiefung ist vorgesehen, dass diese zusammen mit der nur teilweise über den Umfang sich erstreckenden Lauffläche der Lagerstelle eine Querschnittsfläche bilden, bei der die Rotationsachse in der Querschnittsfläche der Lagerstelle liegt. Diese Ausführungsform weist den Vorteil auf, dass eine Versteifung der Ausgleichswelle ermöglicht ist und somit die Ausgleichswelle für besondere Belastungen einsetzbar ist. In einem solchen Fall wird die etwas verringerte Gewichtseinsparung untergeordnet.

Nach einer alternativen Ausgestaltung der Erfindung ist vorgesehen, dass eine Vertiefung in der Lagerstelle im Querschnitt gesehen zumindest einen mittleren Abschnitt aufweist, der in der Rotationsachse der Ausgleichswelle liegt. Diese Vertiefung kann zwischen zwei Stützflächen oder zwischen der Lauffläche und einer benachbarten Stützfläche liegen. Dadurch kann die Rotationsachse ausgesteift werden, wobei benachbart zu dem mittleren Abschnitt zumindest ein weiterer Vertiefungsabschnitt zur Gewichtseinsparung ausgebildet sein kann.

Eine weitere alternative Ausgestaltung der Lagerstelle sieht vor, dass die Lauffläche und zumindest eine Stützfläche der Lagerstelle und die dazwischen angeordnete zumindest eine Vertiefung eine Querschnittsfläche bilden, bei der die Rotationsachse außerhalb der Querschnittsfläche liegt. Dadurch kann beispielsweise ein sichelförmiger Querschnitt der Lagerstelle erzielt werden. Ein solcher Querschnitt weist den Vorteil auf, dass dieser gleichzeitig als Schöpfer für die Schmierflüssigkeit wirkt und eingesetzt werden kann.

Eine weitere alternative Ausführungsform der Lagerstelle sieht vor, dass eine Vertiefung mit der partiell über den Umfang der Lagerstelle sich erstreckenden Lauffläche einen turbinenradförmigen oder asymmetrischen Querschnitt bilden. Dadurch ist die Förderung der Schmierflüssigkeit stark begünstigt.

Eine weitere vorteilhafte Ausgestaltung der Lagerstelle für die Ausgleichswelle sieht vor, dass die partiell sich über den Umfang erstreckenden Lauffläche oder Laufflächenabschnitt symmetrisch zur resultierenden Zentrifugalkraft bei Rotation der Ausgleichswelle ausgebildet sind. Dadurch wirken die Lagerstellen selbst wie Unwuchtgewichtsabschnitte und können bei deren Berechnung für die Auslegung der Ausgleichswelle mit einbezogen werden.

Des Weiteren ist vorteilhafterweise vorgesehen, dass die Laufflächenbreite der partiell sich über den Umfang erstreckenden Lauffläche oder Stützfläche der Lagerstelle sich zu den Endabschnitten der Lauffläche zumindest abschnittsweise verjüngen. Anders ausgedrückt bedeutet dies, dass die Lauffläche im Wirkungsbereich der resultierenden Zentrifugalkraft eine größte Breite beziehungsweise Erstreckung in Achslängsrichtung der Ausgleichswelle aufweist und sich im und entgegen dem Uhrzeigersinn zu den freien Endabschnitten der Lauffläche in deren Breite zumindest abschnittsweise verjüngt. Dadurch kann eine zusätzliche Gewichtseinsparung und Verringerung der Lagerreibung erzielt werden. Die Breite der Lauffläche kann sich entlang des Umfangswinkels auch mehrfach ändern, so dass eine Verjüngung und eine Verbreiterung abwechselnd vorgesehen ist. Analoges gilt für die Stützfläche. Die Verjüngung kann gleichzeitig an Lauf- und Stützfläche vorgesehen sein.

Der Umfangswinkel der Laufflächen oder Stützfläche der ersten Lagerstelle ist gemäß einer vorteilhaften Ausgestaltung der Erfindung gleich zum Umfangswinkel der Lauffläche oder Stützfläche der zumindest einen weiteren Lagerstelle. Dadurch werden gleiche Lagerbedingungen an jeder Lagerstelle geschaffen.

Des Weiteren ist bevorzugt vorgesehen, dass die erste und zumindest eine weitere Lauffläche oder Stützfläche der zumindest einen weiteren Lagerstelle in Achslängsrichtung der Ausgleichswelle betrachtet bezüglich deren Umfangswinkel gleich ausgerichtet sind. Dadurch kann insbesondere eine Ausgleichswelle für die statische Unwucht im Motorengehäuse geschaffen werden. Gleichzeitig wird dadurch auch eine im Wesentlichen spiegelsymmetrische Anordnung zur Mittelebene der Ausgleichswelle ermöglicht.

Nach einer alternativen Ausgestaltung der Erfindung ist vorgesehen, dass die Laufflächen der Lagerstellen in Achslängsrichtung zueinander verdreht vorgesehen sind. Dadurch kann eine sogenannte Momentenunwucht ausgeglichen werden. Solche Ausgleichswellen werden insbesondere bei Motoren mit einer V-förmigen Zylinderanordnung oder einer ungeraden Zylinderanzahl eingesetzt. Beispielsweise können bei einer Ausgleichswelle von mit zwei Lagerstellen die Laufflächen dieser Lagerstellen um 180° zueinander verdreht vorgesehen sein. Sofern mehr als zwei Lagerstellen vorgesehen sind, wird die Ausrichtung der Laufflächen an die zu erzielende Momentenunwucht angepasst und entsprechend zur Mittelebene der Ausgleichswelle in radialer Wirkrichtung gegeneinander versetzt oder verdreht angeordnet, so dass die entsprechenden Momentenunwuchten erzeugt werden können. Entsprechend dieser Anordnung sind die Stützflächen der Lauffläche einer jeder Lagerstelle zugeordnet.

Bevorzugt ist für eine Ausgleichwelle für die Momentenunwucht vorgesehen, dass diese im Wesentlichen punktsymmetrisch zur Mittelebene ausgebildet ist. Dadurch können definierte Kräfte entsprechend dem jeweiligen Hebelarm zur Mittelebene wirken, wodurch die Momentenunwucht exakt auf die entgegenzuwirkenden Kräfte anpassbar ist.

Nach einer weiteren bevorzugten Ausgestaltung ist vorgesehen, dass bei wenigstens zwei gegeneinander um die X-Achse beziehungsweise Längsachse der Ausgleichswelle verdreht zueinander angeordneten Laufflächen der Lagerstelle ein Überschneidungsbereich der Laufflächen vorgesehen ist. Die Endbereiche der Lauffläche überlagern sich bei einer Blickrichtung entlang der Längsachse bevorzugt geringfügig. Dadurch kann eine verlustarme Lagerung vorgesehen sein.

Nach einer weiteren bevorzugten Ausgestaltung der Erfindung ist vorgesehen, dass zumindest ein Unwuchtabschnitt einen Außenumfangsabschnitt aufweist, der mit einem größeren Durchmesser als derjenige der zumindest einen Lauffläche der Lagerstelle ausgebildet ist. Solche über den Außenumfang der Lauffläche hinausstehenden Unwuchtabschnitte sind bevorzugt an einem äußeren Endabschnitt der Ausgleichswelle vorgesehen, so dass eine einfache Montage erhalten bleibt. Solche Ausgleichswellen dienen ebenfalls zum Ausgleich der Momentenunwucht.

Die Ausgleichswelle weist nach einer bevorzugten Ausgestaltung zumindest eine Lagerstelle und ein Festlager auf. Dadurch kann eine definierte Lagerung der Ausgleichswelle für deren Einsatz, insbesondere in einem Motorgehäuse, vorgesehen sein. Alternativ können auch zwei Lagerstellen vorgesehen werden, um eine Lagerung der Ausgleichswelle zu ermöglichen.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht einer ersten erfindungsgemäßen Ausführungsform einer Ausgleichswelle,
- Figur 2: eine schematische Seitenansicht der Ausgleichswelle gemäß Figur 1,
- Figur 3a: eine schematische Schnittdarstellung entlang der Linie III-III in Figur 2,
- Figur 3b: eine schematische Schnittdarstellung eines alternativen Querschnitts zu Figur 3a,
- Figur 4: eine perspektivische Ansicht einer zweiten erfindungsgemäßen Ausführungsform einer Ausgleichswelle,
- Figur 5: eine schematische Seitenansicht der Ausgleichswelle gemäß Figur 4,
- Figur 6: eine schematische Schnittdarstellung entlang der Linie V-V in Figur 5,
- Figur 7: eine perspektivische Ansicht einer dritten erfindungsgemäßen Ausführungsform einer Ausgleichswelle,
- Figur 8: eine schematische Seitenansicht der Ausgleichswelle gemäß Figur 7,
- Figur 9: eine perspektivische Ansicht einer vierten erfindungsgemäßen Ausführungsform einer Ausgleichswelle,
- Figur 10: eine schematische Seitenansicht der Ausgleichswelle gemäß Figur 9,
- Figur 11: eine perspektivische Ansicht einer nicht erfindungsgemäßen Ausführungsform einer Ausgleichswelle,
- Figur 12: eine schematische Seitenansicht der Ausgleichswelle gemäß Figur 11 und
- Figur 13: eine schematische Schnittdarstellung entlang der Linie XII-XII in Figur 12.

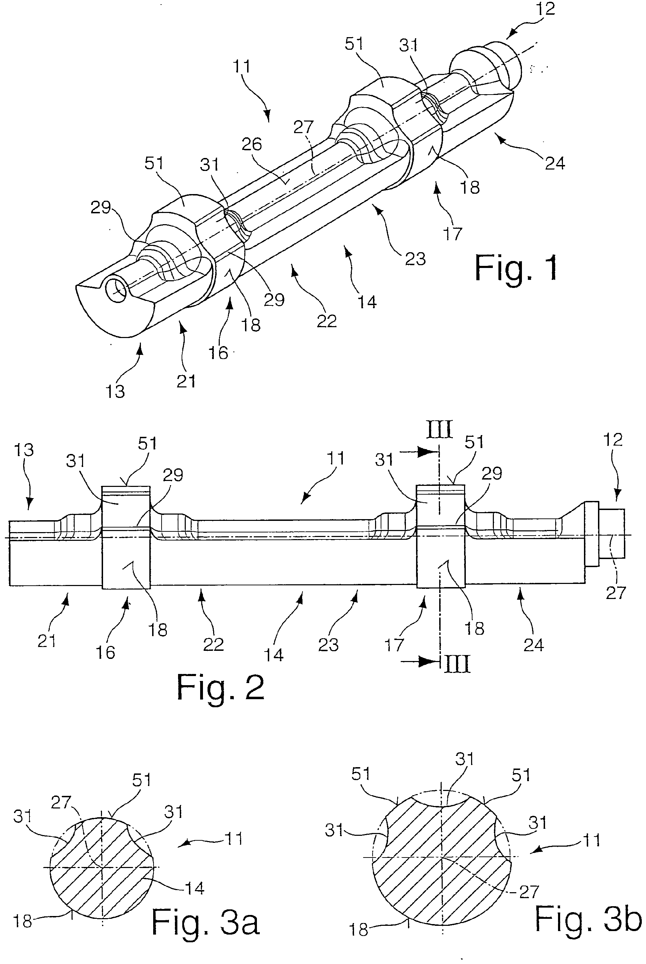

In Figur 1 ist perspektivisch eine erste Ausführungsform der erfindungsgemäßen Ausgleichswelle 11 dargestellt. Eine solche Ausgleichswelle 11 ist beispielsweise für einen Mehrzylindermotor vorgesehen und dient dem Ausgleich von Massenkräften zweiter Ordnung. Üblicherweise werden zwei Ausgleichswellen versetzt zueinander angeordnet, die dann in doppelter Motordrehzahl gegenläufig rotieren.

An einem in Figur 1 gezeigten hinteren Endabschnitt 12 ist der Ausgleichswelle 11 ein nicht näher dargestellter Antrieb, wie beispielsweise ein Kettenrad, vorgesehen, welches die Ausgleichswelle 11 antreibt. Dieser Endabschnitt 12 kann ein Festlager der Ausgleichswelle 11 bilden. Die Ausgleichswelle 11 umfasst einen Grundkörper 14, an dem eine erste und zweite Lagerstelle 16, 17 vorgesehen sind. Diese dienen zur Lagerung der Ausgleichswelle 11 in einem Motorblock. Diese Lagerstellen 16, 17 weisen eine Lauffläche 18 auf, deren Umfang größer als ein Umfang der übrigen Abschnitte des Grundkörpers 14 ausgebildet sind. Dadurch kann die Ausgleichswelle 11 in die Lager beziehungsweise Lagerbuchsen im Motorblock eingeschoben werden, und zwar mit einem Endabschnitt 13 voraus.

Der Grundkörper 14 weist im Wesentlichen in Längsrichtung der Ausgleichswelle 11 über die gesamte Länge einen gleichbleibenden Querschnitt auf. Symmetrisch zur ersten und zweiten Lagerstelle 16, 17 sind Unwuchtgewichtsabschnitte 21 bis 24 vorgesehen, wobei die Unwuchtgewichtsabschnitte 22 und 23 fließend ineinander übergehen. Bei deren Dimensionierung sind die Endabschnitte 12 und 13 berücksichtigt. Der Grundkörper 14 weist einen Wandabschnitt 26 auf, der eine Rotationsachse 27 der Ausgleichswelle 11 durchquert beziehungsweise in dieser Rotationsachse 27 liegt.

Die erste und zweite Lagerstelle 16, 17 weist eine partiell über den Umfang einer Lagerstelle 16, 17 sich erstreckende Lauffläche 18 auf, die sich nur teilweise über den Umfang erstreckt. Dieser Umfang kann gleich, größer oder kleiner 180° ausgebildet sein. Durch diese Ausgestaltung wird ein sogenanntes Partiallager gebildet. Im Ausführungsbeispiel gemäß Figur 3a liegt der Umfangswinkel der Lauffläche beispielsweise in einem Bereich zwischen 180° und 220°. In dem weiteren Bereich, der für einen 360° Winkel zur Vervollständigung vorgesehen wäre, ist erfindungsgemäß zumindest eine Stützfläche 51 vorgesehen, die jedoch den durch die Lauffläche gebildeten freien Bereich nicht vollständig schließt. Die in den Figuren 1 bis 3 dargestellte erfindungsgemäße erste und zweite Laufstelle 16, 17 ermöglicht, dass im Vergleich zu kreiszylindrischen beziehungsweise scheibenförmigen Lagerstellen, die aus dem Stand der Technik bekannt sind, eine Lagerstelle 16, 17 mit einer erheblichen Gewichtseinsparung ausgestaltet ist. Gleichzeitig können die über Umschlingungswinkel der Lauffläche darüber hinaus ragenden Endbereiche 29 sichergestellt werden, dass ein einfacher Anlauf einer stillstehenden Ausgleichswelle 11 in einem Lager im Motorblock ermöglicht ist und dass insbesondere bei einem Stillstand der Ausgleichswelle in einer Position, in der die Unwuchtgewichtsabschnitte 21 bis 24 vertikal nach oben weisen, ein sicheres Anlaufen ohne Verkanten ermöglicht ist.

Die Lagerstelle 16, 17 weist im Querschnitt gemäß Figur 3a gesehen zwei Vertiefungen 31 auf, die topf- oder wannenförmig ausgebildet sind. Diese Vertiefungen 31 können als Taschen ausgebildet sein, welche nur geringfügig gegenüber dem Außenumfang zurücktreten. Ebenso können diese Vertiefungen 31 für eine starke Querschnittsverringerung in der Lagerstelle 16, 17 ausgebildet sein. Die Vertiefungen 31 sind beispielsweise symmetrisch zur Stützfläche 51 angeordnet und in der Größe gleich ausgebildet. Solche Vertiefungen 31 können auch ungleich zueinander ausgebildet sein und nicht symmetrisch zur Stützfläche 51 angeordnet werden. Im Ausführungsbeispiel gemäß Figur 3a umfasst die Lauffläche 18 einen Umfangswinkel von gleich oder größer 180°. Es ist nur eine Stützfläche 51 ausgebildet. Durch die in Figur 3a dargestellte Querschnittsanordnung ist eine versteifte Ausgestaltung der Lagerstelle 16, 17 ausgebildet.

Die bei der Rotation der Ausgleichswelle resultierende Zentrifugalkraft weist im Ausführungsbeispiel aufgrund der dargestellten Lage der Ausgleichswelle 11 senkrecht nach unten gemäß Pfeil F_{Z} in Figur 3. Symmetrisch hierzu sind die Laufflächenabschnitte zur Bildung der partiellen Laufflächen 18 vorgesehen, die sich in und entgegen dem Uhrzeigersinn erstrecken. Idealerweise ist die in Figur 3 dargestellte symmetrische Anordnung eines linken und rechten Laufflächenabschnittes zur Bildung der gesamten partiellen Lauffläche 18 im Verhältnis zur Ausrichtung der resultierenden Zentrifugalkraft vorgesehen. Alternativ kann die resultierende Zentrifugalkraft auch eine Ausrichtung, wie beispielsweise in 4 oder 5 Uhr-, als auch 7 oder 8 Uhr-Position oder dergleichen, umfassen. Die aus der Stützfläche 51 resultierende Stützkraft ist bevorzugt der durch die Lauffläche bestimmten Zentrifugalkraft entgegengesetzt, um gute Laufeigenschaften zu erzielen. Die Stützflächen 51 weisen insbesondere den Vorteil auf, wenn eine Ruhelage der Ausgleichswelle eine Überkopfanordnung aufweist, das heißt, dass die Stützfläche 51 als tiefster Punkt in einem Motorgehäuse die Auflagefläche der Ausgleichswelle 11 in einer Ruhelage darstellt.

In Figur 3b ist eine alternative Querschnittsform der Lagerstelle zur Figur 3a dargestellt. Anstelle von nur einer Stützfläche 51 gemäß Figur 3a sind beispielsweise zwei Stützflächen 51 vorgesehen. Alternativ können auch mehrere Stützflächen 51 ausgebildet werden. Diese Stützflächen 51 sind vorzugsweise gleichmäßig über den von der Lauffläche 18 nicht eingenommenen Umfangsabschnitt verteilt angeordnet. Bei dem Ausführungsbeispiel gemäß Figur 3b weist die Lauffläche 18 einen Umfangswinkel von weniger 180° auf. Dieser kann in Analogie zu Figur 3a auch gleich oder größer 180° sein. Die Größe, Tiefe und Form der Vertiefungen 31 ist variabel und an verschiedene Anforderungen anpassbar. Auch bei einer solchen Ausführungsform kann eine Vertiefung bis zur Rotationsachse 27 reichen oder sogar derart ausgebildet sein, dass die Rotationsachse 27 freigeschnitten ist.

Die Vertiefungen, welche sich gemäß Figur 3a zwischen Sitzfläche 51 und der Lauffläche 18 ergeben können in der Form und Geometrie auch voneinander abweichen. Analoges gilt für Vertiefungen, die zwischen den Stützflächen 51 vorgesehen sind. Durch die Geometrie der Vertiefungen kann gleichzeitig Einfluss auf die Unwucht und die in der Lagerstelle wirkende Masse genommen werden.

Bei der in den Figuren 1 bis 3 dargestellten Ausgleichswelle 11 sind die Lagerstellen 16 und 17 zur Bildung eines Gleitlagers ausgebildet. Diese Lagerstellen 16 und 17 können auch zur Bildung eines Wälzlagers in dem Motorblock ausgebildet sein. Die Lagerstellen am Motorblock können beispielsweise Zylinderrollen oder Rollen mit einer Nadelhülse umfassen. Die in Figur 3 dargestellte Querschnittsfläche mit den seitlich nach oben stehenden Endbereichen 29 zur Bildung der Lauffläche 18 weist den Vorteil auf, dass gleichzeitig eine Verwirbelung der Schmierflüssigkeit erfolgt und eine Schmierung der Lagerstelle 16, 17 sichergestellt ist.

Durch die in den Figuren 1 bis 3 dargestellte Ausgleichswelle werden insbesondere Massenkräfte, die eine statische Unwucht erzeugen, ausgeglichen, wie diese beispielsweise bei Vierzylinder-Reihenmotoren auftreten. Dadurch kann eine statische Unwucht ausgeglichen, welche beispielsweise in einer Y-Achse wirkt, welche senkrecht zur Z-Achse steht, wobei die X-Achse die Längsachse der Ausgleichswelle 11 bildet. Alternativ können solche Ausgleichswellen 11 auch an den Einbau in Einzylindermotoren angepasst werden und dafür vorgesehen sein.

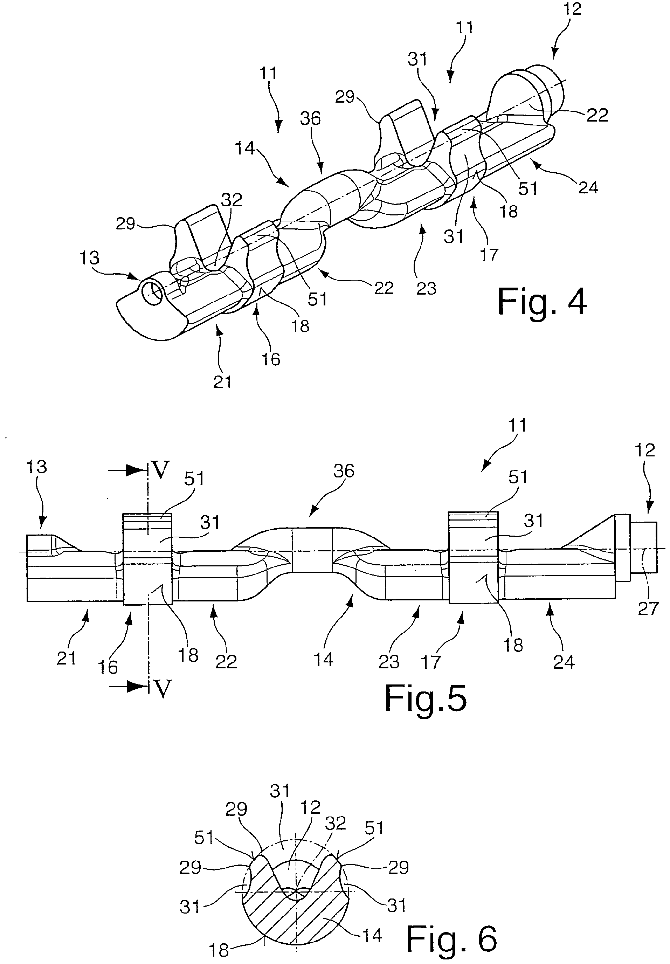

In den Figuren 4 bis 6 ist eine weitere alternative Ausführungsform einer Ausgleichswelle 11 zu Figur 1 dargestellt. Bei dieser Ausgleichswelle 11 ist der Grundkörper 14 modifiziert und wie in Figur 6 dargestellt, die Lagerstelle 16, 17 abweichend von Figur 3a und b ausgebildet.

Die Lagerstelle 16, 17 umfasst eine Vertiefung 31, die beispielsweise wannenförmig ausgebildet ist, wobei ein mittlerer Wandabschnitt 32 der Vertiefung 31 und den partiell über den Umfang der Lagerstelle 16, 17 sich erstreckende Lauffläche 18 eine Querschnittsfläche bilden, die außerhalb der Rotationsachse 27 liegt. Bei einer solchen Ausführungsform wird das Gewicht der Lagerstelle 16, 17 gegenüber der Ausführungsform in Figur 3 noch weiter reduziert. Die damit verbundene Reduzierung der Unwucht wird dadurch kompensiert, dass im Vergleich an einer oder mehreren Stellen weniger Masse vorgesehen wird, die einen größeren Abstand zur Rotationsachse hat. Dieses Prinzip ermöglicht eine weitere Reduzierung der Gesamtmasse. Dabei ist bevorzugt vorgesehen, dass fließend weiche Übergänge von den Endabschnitten 12, 13 jeweils zum mittleren Wandabschnitt 32 der Lagerstelle 16, 17 vorgesehen sind. Solche weichen Übergänge sind ebenfalls zur Mitte der Ausgleichswelle 11 vorgesehen, welche einen Lünettenangriffsabschnitt 36 umfasst. Während der Herstellung solcher Ausgleichswellen 11, die zwischen Spitzen an den Endabschnitten 12 und 13 drehbar gelagert ist, greift eine Haltevorrichtung beziehungsweise Lünette zusätzlich an dem Lünettenangriffsabschnitt 36 an, um eine präzise Ausgestaltung der Lauffläche 18 während der Bearbeitung der Ausgleichswelle zu ermöglichen.

Eine in den Figuren 4 bis 6 dargestellte Ausgleichswelle 11 ist auf einem maximalen Leichtbau ausgelegt. Durch die Ausbildung der Stützflächen 51 wurde die Laufeigenschaft verbessert. Die Stützflächen 51 können dabei in Abhängigkeit der Geometrie der Vertiefung 31 an den Außenumfang der Lagerstelle 16, 17 angepasst werden. Dadurch können sich verschiedene Geometrien für die Querschnittsflächen ergeben, um einerseits eine Lauffläche 18 auszubilden und andererseits zumindest eine Stützfläche 51 vorzusehen, um diese mit einer hinreichenden Steifigkeit miteinander zu verbinden. Beispielsweise kann die Stützfläche 51 eine radial zur gegenüberliegenden Stützfläche 51 hin ausgerichteten ringförmigen Abschnitt umfassen, um die Abstützflächen zu vergrößern.

In Abhängigkeit der verwendeten Materialien kann ein Mindestmaß an Steifigkeit und Biegefestigkeit in Längsrichtung der Ausgleichswelle 11 erzielt werden. Die Unwuchtgewichtsabschnitte 21, 22 sowie 23 und 24 sind symmetrisch zur Lagerstelle 16, 17 angeordnet, wobei jeweils deren weiterer Verlauf des Grundkörpers 14, wie beispielsweise der der Endabschnitte 12, 13 sowie der des Lünettenangriffsabschnitt 36, in die Auslegung der Masse der Unwuchtgewichtsabschnitte 21, 22, 23, 24 einfließt. Der kreissegmentförmige Querschnitt der Unwuchtgewichtsabschnitte 21, 22, 23, 24 weist den Vorteil auf, dass dadurch das Unwuchtgewicht weit exzentrisch außerhalb der Rotationsachse 27 positioniert werden kann.

Bei den vorgeschriebenen Ausführungsformen kann die Vertiefung 31 zusammen mit der Lauffläche 18 und der zumindest einen Stützfläche 51 oder zwischen den Stützflächen 51 einen turbinenradförmigen oder asymmetrischen Querschnitt aufweisen.

Die Ausgestaltung der Vertiefung 31 in deren Form, Größe und/oder Geometrie ist an den jeweiligen Anwendungsfall angepasst, wobei eine Vielzahl von Ausgestaltungsmöglichkeiten vorgesehen sein können.

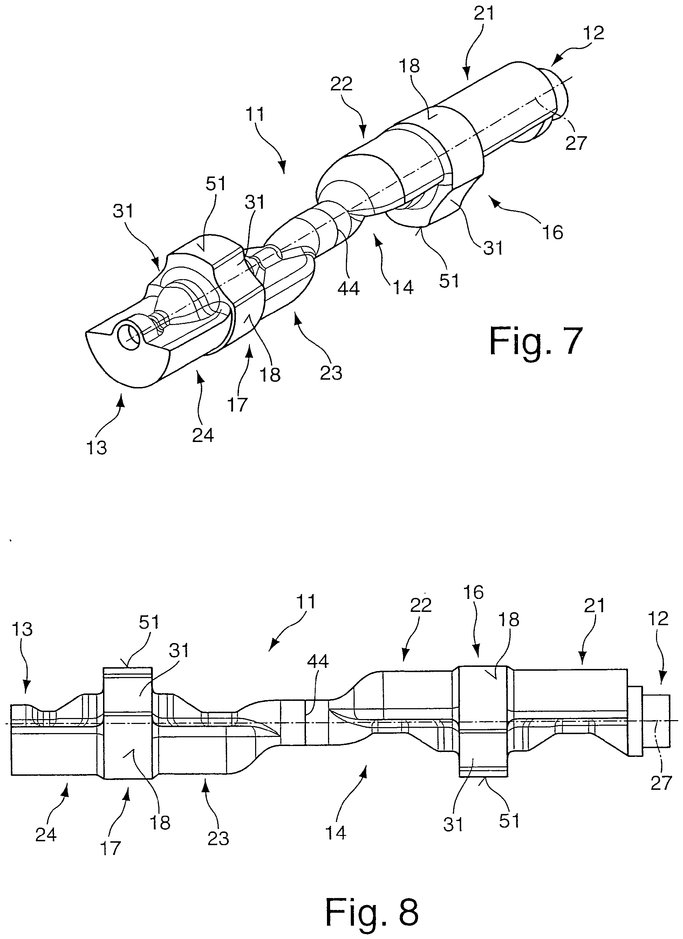

In den Figuren 7 und 8 ist eine weitere alternative Ausführungsform einer Ausgleichswelle 11 dargestellt. Diese Ausgleichswelle 11 unterscheidet sich zu denjenigen in den vorstehenden Figuren dadurch, dass die Unwuchtgewichtsabschnitte 21, 22, 23, 24 und Lagerstellen 16, 17 zur Mittelebene 44 im Wesentlichen punktsymmetrisch ausgebildet sind. Die Mittelebene 44 steht senkrecht zur X-Achse beziehungsweise Rotations- oder Längsachse der Ausgleichswelle 11. Eine solche Ausgleichswelle 11 wird im Unterschied zu den vorstehenden Ausgleichswellen 11 gemäß den Figuren 1 bis 6 zum Momentenunwuchtsausgleich eingesetzt. Eine solcher Momentenunwuchtsausgleich ist bei Motoren mit beispielsweise einer V-förmigen Zylinderanordnung, wie bei V3- oder V6-Motoren oder Reihenmotoren mit ungerader Zylinderanzahl, vorgesehen.

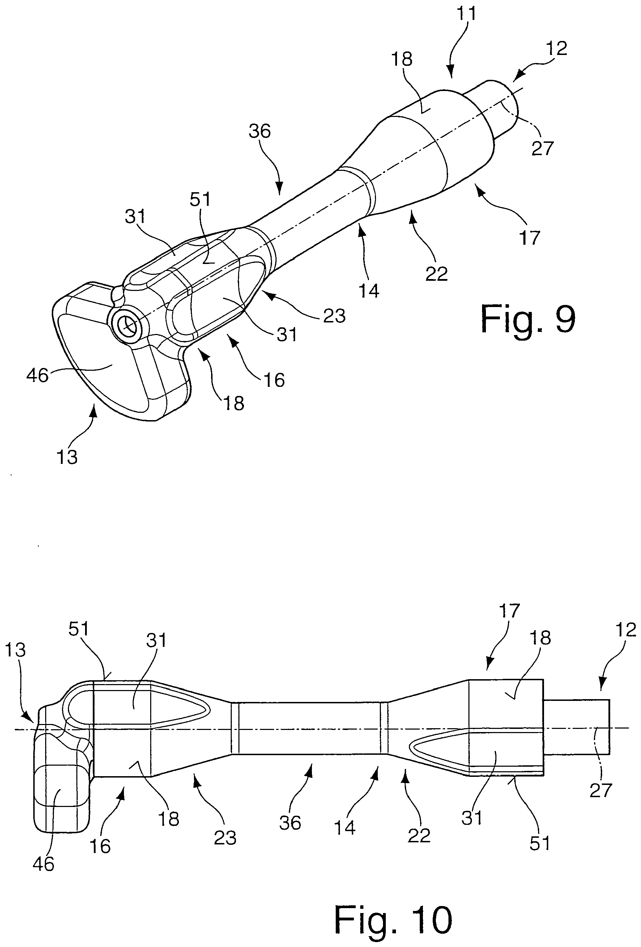

In den Figuren 9 und 10 ist eine weitere alternative Ausführungsform einer Ausgleichswelle 11 dargestellt. Diese Ausführungsform ist eine Alternative zu der Ausgleichswelle 11 gemäß den Figuren 7 und 8. Bei dieser Ausführungsform ist an einem Ende der Ausgleichswelle 11 ein Unwuchtgewichtsabschnitt 46 vorgesehen, der zumindest abschnittsweise einen Außenumfang aufweist, welcher im Durchmesser größer als der Durchmesser der Lauffläche 18 ausgebildet ist. Dieser Unwuchtgewichtsabschnitt 46 ist als scheibenförmige Unwuchtmasse beziehungsweise als Teilsegment einer scheibenförmigen Unwuchtmasse ausgebildet. Die Anordnung einer solchen Unwuchtmasse an einem äußeren Ende der Ausgleichswelle 11 weist den Vorteil auf, dass eine einfache Montage der Ausgleichswelle 11 erhalten bleibt. Im Übrigen gelten die Ausführungen zu den vorstehenden Figuren. Der Unwuchtgewichtsabschnitt 46 kann zusätzlich zu den am äußeren Ende liegenden Unwuchtgewichtsabschnitten 21, 24 ausgebildet sein oder diese umfassen.

Bei den vorgenannten Ausführungsbeispielen kann vorgesehen sein, dass zur Ölversorgung in der Ausgleichswelle 11 eine Axialbohrung vorgesehen sein kann, von der aus zumindest eine Radialbohrung abzweigt, die in die Lagerstelle 16, 17 mündet. Beispielsweise kann die radiale Abzweigbohrung nahe einem Endbereich 29 der Lauffläche 18 zugeordnet sein oder in die Lauffläche 18 münden. Analoges kann für die Stützfläche 51 gelten. Ebenso kann die Radialbohrung auch in eine Vertiefung 31 münden. Die radiale Ausrichtung und die Anzahl der Radialbohrungen sind abhängig von der erforderlichen Schmierstoffzuführung.

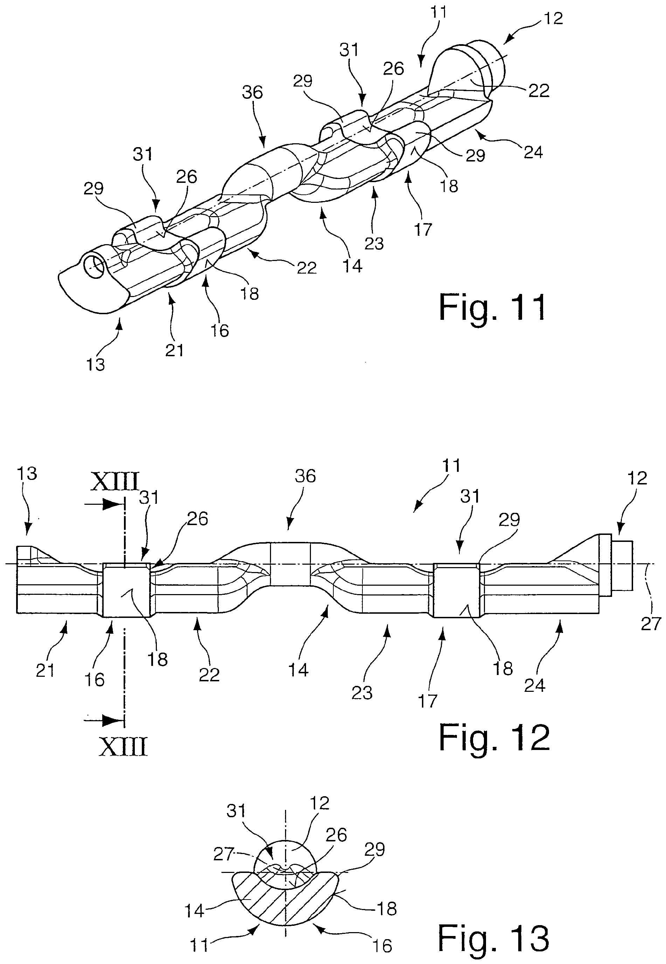

In den Figuren 11 bis 13 ist eine alternative Ausführungsform einer nicht erfindungsgemäßen Ausgleichswelle 11 dargestellt. Diese Ausgleichswelle 11 weicht von der Ausgleichswelle 11 gemäß den Figuren 4 bis 6 dahingehend ab, dass keine Stützflächen 51 vorgesehen sind. Die Lauffläche 18 der Lagerstelle 16, 17 weist einen Umfangswinkel von kleiner 180° auf. Zwischen den Endbereichen 29 der Lauffläche ist beispielsweise eine Vertiefung 31 vorgesehen, die wannenförmig ausgebildet ist, wobei deren mittlerer Wandabschnitt 32 außerhalb der Rotationsachse 27 liegt, so dass die Rotationsachse 27 freigeschnitten ist. Bei einer solchen Ausführungsform wird das Gewicht der Lagerstellen 16, 17 weiter reduziert. Die damit verbundene Reduzierung der Unwucht wird dadurch kompensiert, dass im Vergleich an einer oder mehreren Stellen weniger Masse vorgesehen wird, die einen größeren Abstand zur Rotationsachse 27 hat. Dieses Prinzip ermöglicht eine weitere Reduzierung der Gesamtmasse. Es ist bevorzugt vorgesehen, dass fließend weiche Übergänge von den Endabschnitten 12, 13 jeweils zum mittleren Abschnitt 32 der Lagerstellen 16, 17 vorgesehen sind. Solche Übergänge sind ebenfalls zur Mitte der Ausgleichswelle 11 vorgesehen, welche einen Lünettenangriffsabschnitt 36 umfasst. Während der Herstellung solcher Ausgleichswellen, die zwischen Spitzen an den Endabschnitten 12 und 13 treten und drehbar gelagert ist, greift eine Haltevorrichtung beziehungsweise Lünette zusätzlich an dem Lünettenangriffsabschnitt 36 für eine präzise Bearbeitung an. Im Übrigen können die zuvor beschriebenen Merkmale mit den einzelnen Ausführungsformen auch für die vorliegende Ausgleichswelle 11 gemäß den Figuren 11 bis 13 vorgesehen sein, sofern diese sich nicht auf die Stützflächen 51 als solche und einen Umfangswinkel der Lauffläche 18 der Lagerstellen 16, 17 als solchen beziehen.

Die vorstehend beschriebenen Ausgleichswellen 11 können auch beliebig miteinander in einem Motor kombiniert werden. Dies ist abhängig von der Motorenkonstruktion, so dass die Auslegung der Ausgleichswelle oder der Ausgleichswellen an die auszugleichende statische Unwucht und/oder Momentenunwucht anpassbar ist. Ebenso können einzelne Merkmale von einzelnen Ausgleichswellen 11 miteinander kombiniert werden.

Alle vorbeschriebenen Ausführungsbeispiele haben gemeinsam, dass der Schwerpunkt der Ausgleichswelle 11 spätestens im montieren Zustand einen Schwerpunkt in einer Mitte des Mehrzylindermotors bezogen auf dessen Längsrichtung umfasst.

Alle vorbeschriebenen Merkmale sind jeweils für sich erfindungswesentlich und können beliebig miteinander kombiniert werden.

## Patentansprüche

1. Ausgleichswelle für einen Ein- oder Mehrzylindermotor mit wenigstens einem Unwuchtgewichtsabschnitt (21, 22; 23, 24) und wenigstens einer Lagerstelle (16, 17), wobei der wenigstens eine Unwuchtgewichtsabschnitt (21, 22; 23, 24) der Lagerstelle (16, 17) zugeordnet ist und die Lagerstelle (16, 17) eine radiale Lauffläche (18) aufweist, welche sich nur partiell über einen Umfang der Lagerstelle (16, 17) erstreckt und eine bei Rotation der Ausgleichswelle (11) resultierende Zentrifugalkraft innerhalb einem Bereich der Lagerstelle (16, 17) liegt, der durch die partiell über den Umfang der Lagerstelle (16, 17) sich erstreckende Lauffläche (18) gebildet ist, **dadurch gekennzeichnet, dass** die Lagerstelle (16, 17) zumindest eine Stützfläche (51) aufweist, die partiell über den Umfang der Lagerstelle (16, 17) und getrennt zur Lauffläche (18) vorgesehen ist, welche den durch die Lauffläche (18) gebildeten freien Bereich nicht vollständig schließt.

2. Ausgleichswelle nach Anspruch 1, **dadurch gekennzeichnet, dass** die zumindest eine Stützfläche (51) denselben Außenumfang aufweist wie die partiell ausgebildete Lauffläche (18) der Lagerstelle (16, 17).

3. Ausgleichswelle nach Anspruch 1 oder 2, **dadurch gekennzeichnet, dass** auf die bei der Rotation der Ausgleichswelle (11) auf die Lauffläche (18) wirkende Zentrifugalkraft entgegengesetzt eine Kraftresultierende aus der zumindest einen Stützfläche (51) wirkt.

4. Ausgleichswelle nach einem der vorhergehenden Ansprüche, **dadurch gekennzeichnet, dass** die Lauffläche (18) der zumindest einen Lagerstelle (16, 17) einen Umfangswinkel aufweist, der gleich oder kleiner 180° ist oder dass die Lauffläche (18) der zumindest einen Lagerstelle (16, 17) einen Umfangswinkel aufweist, der größer 180° ist.

5. Ausgleichswelle nach einem der vorhergehenden Ansprüche, **dadurch gekennzeichnet, dass** die Lauffläche (18) oder die zumindest eine Stützfläche (51) ballig ausgebildet ist.

6. Ausgleichswelle nach einem der vorhergehenden Ansprüche, **dadurch gekennzeichnet, dass** zwischen der zumindest einen Stützfläche und der Lauffläche (18) der Lagerstelle (16, 17) eine Vertiefung (31) ausgebildet ist.

7. Ausgleichswelle nach einem der vorhergehenden Ansprüche, **dadurch gekennzeichnet, dass** die Lagerstelle (16, 17) im Querschnitt zur Längsrichtung der Ausgleichswelle (11) gesehen zumindest eine Vertiefung (31), insbesondere eine V-förmige, W-förmige, wannenförmige oder topfförmige Vertiefung, aufweist.

8. Ausgleichswelle nach Anspruch 7, **dadurch gekennzeichnet, dass** die zumindest eine Vertiefung (31) symmetrisch zur Längsrichtung der Ausgleichswelle (11) ausgebildet ist und/oder dass die Lauffläche (18) der Lagerstelle (16, 17) und die sich daran anschließende Vertiefung (31) eine Querschnittsfläche bilden, bei der die Rotationsachse (27) innerhalb dieser Querschnittsfläche liegt und/oder dass zumindest eine Vertiefung (31) einen mittleren Wandabschnitt (32) aufweist, der in der Rotationsachse (27) der Ausgleichswelle (11) liegt und/oder dass die Lauffläche (18) und die zumindest eine Stützfläche (51) der Lagerstelle (16, 17) und die dazwischen angeordnete zumindest eine Vertiefung (31) eine Querschnittsfläche bilden, bei der die Rotationsachse (27) außerhalb der Querschnittsfläche liegt und/oder dass eine Vertiefung (31) mit der Lauffläche (18) der Lagerstelle (16, 17) einen turbinenradförmigen oder asymmetrischen Querschnitt bildet.

9. Ausgleichswelle nach einem der vorhergehenden Ansprüche, **dadurch gekennzeichnet, dass** die partiell ausgebildete Lauffläche (18) der Lagerstelle (16, 17) sich symmetrisch zur resultierenden Zentrifugalkraft bei der Rotation der Ausgleichswelle (11) erstreckt.

10. Ausgleichswelle nach einem der vorhergehenden Ansprüche, **dadurch gekennzeichnet, dass** die Laufflächen- oder Stützflächenbreite der Lagerstelle (16, 17) sich zu Endbereichen (29) der der partiell ausgebildeten Lauffläche (18) zumindest abschnittsweise verjüngt.

11. Ausgleichswelle nach einem der vorhergehenden Ansprüche, **dadurch gekennzeichnet, dass** ein Umfangswinkel der Lauffläche (18) oder Stützfläche (51) der ersten Lagerstelle (16; 17) gleich zum Umfangswinkel der Lauffläche (18) oder Stützfläche (51) von zumindest einer weiteren Lagerstelle (16; 17) ist.

12. Ausgleichswelle nach einem der vorhergehenden Ansprüche, **dadurch gekennzeichnet, dass** die erste und zumindest eine weitere Lauffläche (18) oder Stützfläche (51) der Lagerstellen (16, 17) in Achslängsrichtung betrachtet bezüglich deren Umfangswinkel gleich ausgerichtet sind oder dass zumindest eine Lagerstelle (16, 17), deren Lauffläche (18) oder Stützfläche (51) sowie ein Unwuchtgewichtsabschnitt (21, 22; 23, 24) punktsymmetrisch zur Mittelebene (44) der Ausgleichswelle (11) angeordnet sind oder dass die erste und zumindest eine weitere Lauffläche (18) der Lagerstellen (16, 17) in Achslängsrichtung betrachtet zueinander verdreht angeordnet sind und vorzugsweise die zueinander verdreht angeordneten Laufflächen (18) der ersten und zumindest einen weiteren Lagerstelle (16, 17) in Achslängsrichtung gesehen einen Überschneidungsbereich aufweisen.

13. Ausgleichswelle nach einem der vorhergehenden Ansprüche, **dadurch gekennzeichnet, dass** zumindest eine Lagerstelle (16, 17) und ein Festlager (12) vorgesehen sind.

14. Ausgleichswelle nach einem der vorhergehenden Ansprüche, **dadurch gekennzeichnet, dass** zumindest ein Unwuchtgewichtsabschnitt (46) vorgesehen ist, der zumindest einen Außenumfangsabschnitt mit einem größeren Durchmesser aufweist als derjenige Durchmesser der zumindest einen Lauffläche (18) der Lagerstelle (16, 17) und/oder dass der Unwuchtgewichtsabschnitt (46) an einem äußeren Ende des Grundkörpers (14) vorgesehen ist.

## Claims

1. Balancing shaft for a single-cylinder or multicylinder engine having at least one unbalanced weight portion (21, 22; 23, 24) and at least one bearing (16, 17), the at least one unbalanced weight portion (21, 22; 23, 24) being associated with the bearing (16, 17) and the bearing (16, 17) having a radial running face (18) which extends only partially over a periphery of the bearing (16, 17) and a centrifugal force which results during rotation of the balancing shaft (11) is situated within a region of the bearing (16, 17) that is formed by the running face (18) which extends partially over the periphery of the bearing (16, 17), **characterized in that** the bearing (16, 17) comprises at least one supporting surface (51), which extend partially over the periphery of the bearing (16, 17) and is separate from the running surface (18), which does not close completely the free region forwarded by the running face (18).

2. Balancing shaft as claimed in claim 1, **characterized in that** the at least one supporting surface (51) has the same outer periphery as the partially formed running face (18) of the bearing (16, 17).

3. Balancing shaft as claimed in claim 1 or 2, **characterized in that** on rotation of the balancing shaft (11) the centrifugal force acting on the running face (18) is opposed by at least one resultant force from the at least one supporting surface (51).

4. Balancing shaft as claimed in one of the preceding claims, **characterized in that** the running face (18) of the at least one bearing (16, 17) has a peripheral angle which is equal to, or smaller than 180°, or that the running face (18) of the at least one bearing (16, 17) has a peripheral angle which is greater than 180°.

5. Balancing shaft as claimed in one of the preceding claims, **characterized in that** the running face (18) or the at least one supporting surface (51) is spherical in its configuration.

6. Balancing shaft as claimed in one of the preceding claims, **characterized in that** between the at least one supporting surface and the running face (18) of the bearing (16, 17) a depression (31) is formed.

7. Balancing shaft as claimed in one of the preceding claims, **characterized in that** the bearing (16, 17) has, viewed in cross section to the longitudinal direction of the balancing shaft (11), a depression (31), in particular a V-shaped, W-shaped, tub-shaped or cup-shaped depression.

8. Balancing shaft as claimed in claim 7, **characterized in that** the depression (31) is configured symmetrically to the longitudinal direction of the balancing shaft (11) and/or that the running face (18) of the bearing (16, 17) and the depression (31) adjoining it form a cross-sectional surface in which the axis of rotation (27) lies within this cross-sectional surface, and/or that the at least one depression (31) has one central wall portion (32) which is situated in the axis of rotation (27) of the balancing shaft (11), and/or that the running face (18) and the at least one supporting surface (51) of the bearing (16, 17) and the depression (31) adjoining it form a cross-sectional surface in which the axis of rotation (27) lies outside this cross-sectional surface and/or that a depression (31) forms with the running face (18) of the bearing (16, 17) a turbine wheel-like or an asymmetrical cross section.

9. Balancing shaft as claimed in one of the preceding claims, **characterized in that** the partially configured running face (18) of the bearing (16, 17) extends symmetrically to the resulting centrifugal force during the rotation of the balancing shaft (11).

10. Balancing shaft as claimed in one of the preceding claims, **characterized in that** the running-face width of the bearing (16, 17) tapers, at least in certain portions, to end regions (29) of the partially configured running face (18).

11. Balancing shaft as claimed in one of the preceding claims, **characterized in that** a peripheral angle of the running face (18) or supporting surface (51) of the first bearing (16; 17) is equal to the peripheral angle of the running face (18) of at least one further bearing (16; 17).

12. Balancing shaft as claimed in one of the preceding claims, **characterized in that** the first and at least one further running face (18) or supporting surface (51) of the bearings (16, 17) are of the same orientation, viewed in the longitudinal direction of the axis, with respect to the peripheral angle thereof or that at least one bearing (16, 17), the running face (18) thereof and an unbalanced weight portion (21, 22; 23, 24) are arranged point-symmetrically to the center plane (44) of the balancing shaft (11) or that the first and at least one further running face (18) of the bearings (16, 17) are arranged, viewed in the longitudinal direction of the axis, rotated relative to one another and preferably the running faces (18), which are arranged rotated relative to one another, of the first and at least one further bearing (16, 17) have, viewed in the longitudinal direction of the axis, an overlap region.

13. Balancing shaft as claimed in one of the preceding claims, **characterized in that** at least one bearing (16, 17) and one fixed bearing (12) are provided.

14. Balancing shaft as claimed in one of the preceding claims, **characterized in that** at least one unbalanced weight portion (46) is provided, which has at least one outer peripheral portion having a larger diameter than that diameter of the at least one running face (18) of the bearing (16, 17), and/or that the unbalanced weight portion (46) is provided at an outer end of the basic element (14).

## Revendications

1. Arbre d'équilibrage pour un moteur mono- ou polycylindrique, avec au moins une partie de contrepoids (21, 22; 23, 24) et au moins un point d'appui (16, 17), ladite au moins une partie de contrepoids (21, 22; 23, 24) étant affectée au point d'appui (16, 17) et le point d'appui (16, 17) présentant une surface de roulement radiale (18) qui s'étend seulement de manière partielle sur une circonférence du point d'appui (16, 17), et une force centrifuge résultante exercée lors de la rotation de l'arbre d'équilibrage (11) étant située à l'intérieur d'une zone du point d'appui (16, 17) laquelle est formée par la surface de roulement (18) s'étendant de manière partielle sur la circonférence du point d'appui (16, 17), **caractérisé en ce que** le point d'appui (16, 17) présente au moins une surface de support (51) qui est prévue de manière partielle sur la circonférence du point d'appui (16, 17) et de manière séparée par rapport à la surface de roulement (18) qui ne ferme pas complètement l'espace libre formé par la surface de roulement (18) .

2. Arbre d'équilibrage selon la revendication 1, **caractérisé en ce que** ladite au moins une surface de support (51) présente la même circonférence extérieure que la surface de roulement (18) partiellement formée du point d'appui (16, 17).

3. Arbre d'équilibrage selon la revendication 1 ou 2, **caractérisé en ce qu'**une force résultante issue de ladite au moins une surface d'appui (51) agit à l'opposé de la force centrifuge agissant sur la surface de roulement (18) lors de la rotation de l'arbre d'équilibrage (11).

4. Arbre d'équilibrage selon l'une quelconque des revendications précédentes, **caractérisé en ce que** la surface de roulement (18) dudit au moins un point d'appui (16, 17) présente un angle inscrit qui est égal ou inférieur à 180° ou **en ce que** la surface de roulement (18) dudit au moins un point d'appui (16, 17) présente un angle inscrit qui est supérieur à 180°.

5. Arbre d'équilibrage selon l'une quelconque des revendications précédentes, **caractérisé en ce que** la surface de roulement (18) ou ladite au moins une surface de support (51) est de forme bombée.

6. Arbre d'équilibrage selon l'une quelconque des revendications précédentes, **caractérisé en ce qu'**un creux (31) est formé entre ladite au moins une surface de support et la surface de roulement (18) du point d'appui (16, 17).

7. Arbre d'équilibrage selon l'une quelconque des revendications précédentes, **caractérisé en ce que** le point d'appui (16, 17) présente, vu en coupe transversale par rapport au sens longitudinal de l'arbre d'équilibrage (11), au moins un creux (31), en particulier en forme de V, en forme de W, en forme de bac ou en forme de pot.

8. Arbre d'équilibrage selon la revendication 7, **caractérisé en ce que** ledit au moins un creux (31) est réalisé de manière symétrique au sens longitudinal de l'arbre d'équilibrage (11) et/ou en ce que la surface de roulement (18) du point d'appui (16, 17) et le creux (31) qui lui est contigu forment une surface de section transversale telle que l'axe de rotation (27) est situé à l'intérieur de ladite surface de section transversale et/ou **en ce qu'**au moins un creux (31) présente une partie de paroi médiane (32) qui est située dans l'axe de rotation (27) de l'arbre d'équilibrage (11) et/ou **en ce que** la surface de roulement (18) et ladite au moins une surface de support (51) du point d'appui (16, 17) et, disposé entre celles-ci, ledit au moins un creux (31) forment une surface de section transversale telle que l'axe de rotation (27) est situé à l'extérieur de ladite surface de section transversale et/ou **en ce qu'**un creux (31) forme, avec la surface de roulement (18) du point d'appui (16, 17), une section transversale asymétrique ou en forme de roue de turbine.

9. Arbre d'équilibrage selon l'une quelconque des revendications précédentes, **caractérisé en ce que** la surface de roulement (18) partiellement formée du point d'appui (16, 17) s'étend de manière symétrique à la force centrifuge résultante exercée lors de la rotation de l'arbre d'équilibrage (11).

10. Arbre d'équilibrage selon l'une quelconque des revendications précédentes, **caractérisé en ce que** la largeur de la surface de roulement (18) ou de la surface de support du point d'appui (16, 17) diminue au moins partiellement vers des zones d'extrémité (29) de la surface de roulement (18) partiellement formée.

11. Arbre d'équilibrage selon l'une quelconque des revendications précédentes, **caractérisé en ce qu'**un angle inscrit de la surface de roulement (18) ou de la surface de support (51) du premier point d'appui (16; 17) est égal à l'angle inscrit de la surface de roulement (18) ou de la surface de support (51) d'au moins un autre point d'appui (16; 17).

12. Arbre d'équilibrage selon l'une quelconque des revendications précédentes, **caractérisé en ce que** la première et ladite au moins une autre surface de roulement (18) ou surface de support (51) des points d'appui (16, 17) sont, vues dans le sens longitudinal de l'axe, orientées de manière identique quant à leur angle inscrit, ou **en ce qu'**au moins un point d'appui (16, 17), la surface de roulement (18) ou surface de support (51) de celui-ci ainsi qu'une partie de contrepoids (21, 22; 23, 24) sont disposés de manière centro-symétrique par rapport au plan central (44) de l'arbre d'équilibrage (11), ou **en ce que** la première et ladite au moins une autre surface de roulement (18) des points d'appui (16, 17) sont, vues dans le sens longitudinal de l'axe, déplacées angulairement l'une par rapport à l'autre, et **en ce que** de préférence les surfaces de roulement (18) du premier et du au moins un autre point d'appui (16, 17) ainsi déplacées angulairement l'une par rapport à l'autre présentent, vues dans le sens longitudinal de l'axe, une zone de superposition.

13. Arbre d'équilibrage selon l'une quelconque des revendications précédentes, **caractérisé en ce qu'**il est prévu au moins un point d'appui (16, 17) et un palier fixe (12).

14. Arbre d'équilibrage selon l'une quelconque des revendications précédentes, **caractérisé en ce qu'**il est prévu au moins une partie de contrepoids (46) qui présente au moins une partie de circonférence extérieure avec un diamètre supérieur au diamètre de ladite au moins une surface de roulement (18) du point d'appui (16, 17) et/ou **en ce que** la partie de contrepoids (46) est prévue à une extrémité extérieure du corps de base (14).
